# FASCICULE DE BREVET EUROPEEN

(11) **EP 1 831 300 B1**
(45) Date de publication et mention de la délivrance du brevet: **24.07.2013**
(21) Numéro de dépôt: 05850623.9
(22) Date de dépôt: 27.12.2005
(51) Int. Cl.: C08K 7/18

(54) **UTILISATION D'UNE SILICE DE PRECIPITATION POUR AUGMENTER LA RESISTANCE AU CHOC D'UN MATERIAU POLYMERE THERMOPLASTIQUE DE TYPE POLYOLEFINE**
VERWENDUNG EINES GEFÄLLTEN SILICIUMDIOXIDS ZUR ERHÖHUNG DER SCHLAGZÄHIGKEIT EINES AUF POLYOLEFIN BASIERENDEN THERMOPLASTISCHEN POLYMEREN MATERIALS
USE OF A PRECIPITATED SILICA FOR INCREASING THE IMPACT-RESISTANCE OF A THERMOPLASTIC POLYMERIC MATERIAL BASED ON POLYEFIN

(30) Priorité: 30.12.2004 FR 0414102
(43) Date de publication de la demande: 12.09.2007
(73) Titulaire: RHODIA CHIMIE, 93300 Aubervilliers Cedex (FR)
(72) Inventeur: GUIU, Antoine, F-75018 Paris (FR); BOMAL, Yves, F-92300 Levallois Perret (FR)
(74) Mandataire: Colombet, Alain André
(86) Numéro de dépôt international: PCT/FR2005/003291
(87) Numéro de publication internationale: WO 2006/072706

(56) Documents cités:
- EP-A- 0 435 513
- DE-A1- 4 435 157
- FR-A- 2 220 539

## Description

La présente invention a trait au renfort de matériaux polymères. Plus précisément, elle concerne l'amélioration de la résistance au choc de matériaux thermoplastiques.

La "résistance au choc" (ou "tenue au choc") d'un matériau polymère désigne, au sens de la présente description, l'aptitude plus ou moins élevée que présente un matériau polymère à résister à la rupture sous l'effet d'un choc, en particulier sous l'effet d'un impact à grande vitesse, à une température donnée. Ainsi, les matériaux présentant une bonne résistance au choc sont en général qualifiés de "tenaces", par opposition aux matériaux "fragiles", qui se brisent facilement sous l'effet d'un choc.

Plus précisément, la résistance au choc d'un matériau polymère à une température donnée peut être quantifiée par des méthodes dites d'essais au choc. Ce type d'essai consiste en général à entailler une éprouvette constituée du matériau à tester (entaille en U ou, le plus souvent, en V), puis à casser cette éprouvette entaillée sous l'impact d'un poids (pendule ou marteau), et à mesurer l'énergie absorbée par la fracture de l'éprouvette, ce qui reflète l'énergie de résistance à la rupture (ou "résilience") du matériau. Plus l'énergie absorbée est importante, plus le matériau est résistant au choc.

Ainsi, la résistance au choc d'un polymère peut notamment être mesurée par la méthode dite "essai au choc Charpy", où l'énergie consommée pour rompre l'éprouvette est mesurée en lâchant un pendule d'une hauteur donnée et en faisant la différence entre la hauteur de chute du pendule et celle à laquelle il remonte après avoir rompu le barreau, le pendule remontant d'autant plus haut que l'énergie consommée pour rompre le matériau est faible. Dans ce cadre, la résistance au choc d'un matériau polymère peut être déterminée selon la méthode spécifique de la norme ISO 179, qui consiste à faire tomber un marteau sur une éprouvette de dimensions 80 mm x 10 mm x 4 mm entaillée en son centre en appui contre deux supports positionnés à ses extrémités.

De bonnes qualités de résistance au choc sont requises dans de nombreuses applications des polymères thermoplastiques. Ainsi, il est notamment souhaitable que des matériaux polymères thermoplastiques utilisés pour la constitution de récipients aient des qualités suffisantes en terme de ténacité pour que le récipient ne se brise pas en cas de choc. De façon plus générale, lorsqu'on utilise des polymères thermoplastiques pour la constitution d'éléments susceptibles d'être soumis à des chocs répétés, par exemple des couches de revêtement, des pièces mécaniques, des pièces pour l'automobile, il est souhaitable que le polymère employé soit le moins fragile possible pour assurer une durée de vie satisfaisante de ces éléments.

Une solution connue pour améliorer les propriétés de tenue au choc d'un matériau thermoplastique consiste à introduire un élastomère au sein du matériau, à titre de charge polymère. Dans ce cadre, US 4,229,504 décrit par exemple l'utilisation d'un élastomère dans une polyoléfine telle que le polypropylène.

Dans le cas de matériaux thermoplastiques de type polypropylène, une autre façon d'augmenter les propriétés de tenue au choc est de leur ajouter une charge polymère de type phase polyéthylène ou α-oléfine de très faible masse moléculaire, éventuellement en conjonction avec une phase élastomère, comme proposé dans les brevets US 5,925,703 ou US 5,041,491. Il a également été proposé dans ce cadre des charges polymères plus spécifiques, tels que les mélanges de copolymères éthylène/propylène et de copolymères éthylène/α-oléfine décrits dans US 6,391,977.

Une autre solution proposée pour accroître la résilience des matériaux polymères thermoplastiques tel que le polypropylène consiste à y incorporer des particules de carbonate de calcium traitées en surface par de l'acide stéarique. A ce sujet, on pourra notamment se reporter à l'article de Zuiderduin et al. dans Polymer, volume 44, pages 261 à 275 (2003), ou bien encore la demande WO 00/049,081, qui décrit, de façon plus générale, l'utilisation de charges minérales traitées par un acide gras pour ce type d'application.

Un but de la présente invention est de fournir un moyen améliorer la tenue au choc de matériaux thermoplastiques, en particulier celle de matériaux thermoplastiques à base de polyoléfines telles que le polypropylène, sans avoir nécessairement à modifier la composition du polymère par ajout des charges polymères spécifiques précitées ou à utiliser des charges minérales traitées par un acide gras.

A cet effet, la présente invention a pour objet l'utilisation, dans un matériau polymère thermoplastique à base d'une ou plusieurs polyoléfines d'une silice de précipitation spécifique, à titre de charge minérale pour augmenter la résistance au choc dudit matériau polymère.

Plus précisément, la silice utile selon l'invention est une silice qui :
(i) a une BET inférieure ou égale à 130 m²/g ; et
(ii) est susceptible d'être obtenue selon un procédé particulier, à savoir par séchage (de préférence par un séchage par atomisation) d'une dispersion aqueuse de silice issue d'un procédé de précipitation de silice par réaction d'un silicate et d'un agent acidifiant, où le procédé de précipitation comprend les étapes suivantes :
   (A) former un pied de cuve contenant, en milieu aqueux :
      - au moins une partie de la quantité totale du silicate engagé dans la réaction de précipitation ; et
      - un électrolyte ;
   (B) ajouter une première partie d'agent acidifiant au pied de cuve de l'étape (A), jusqu'à l'obtention d'une valeur de pH compris entre 7 et 8,5 ; et
   (C) le cas échéant, ajouter au milieu réactionnel obtenu à l'issue de l'étape (B) la quantité restante de silicate conjointement à une autre partie de l'agent acidifiant, le pH étant alors de préférence maintenu à une valeur sensiblement constante tout au long de l'addition conjointe, avantageusement à une valeur de pH comprise entre 7 et 8,5.

Le silicate et l'agent acidifiant mis en oeuvre dans les étapes (A) à (C) précitées peuvent être choisis parmi les silicates et agents acidifiants usuellement employés dans les procédés de précipitation de silice à partir de silicate en milieu acide. Ainsi, on peut utiliser à titre de silicate toute forme courante de silicate, notamment des métasilicates, ou des disilicates. Avantageusement, le silicate de l'étape (A) et de l'éventuelle étape (C) est un silicate de métal alcalin, de préférence un silicate de potassium, ou plus avantageusement un silicate de sodium. Selon un mode de réalisation intéressant, le silicate est un silicate de sodium ayant un rapport pondéral SiO₂/Na₂O compris entre 3 et 4, typiquement entre 3,3 et 3,6, par exemple de l'ordre de 3,4 à 3,5.

Par ailleurs, comme agent acidifiant des étapes (A) à (C), on peut avantageusement en particulier utiliser un acide fort tel que l'acide sulfurique, l'acide chlorhydrique, ou l'acide nitrique, ou bien encore un acide organique tel que l'acide acétique, l'acide formique ou l'acide carbonique. Avantageusement, l'agent acidifiant utilisé est l'acide sulfurique, en particulier lorsque le silicate utilisé est le silicate de sodium.

Le pied de cuve formé dans l'étape (A) comprend tout ou partie du silicate et un électrolyte, généralement en solution dans de l'eau.

Le terme "électrolyte", au sens où il est employé ici, s'entend dans son acception normale, et désigne toute substance ou composé qui se dissocie ou se décompose en solution aqueuse pour former des espèces ioniques ou des particules chargées. De préférence, l'électrolyte du pied de cuve de l'étape (A) est un sel alcalin ou alcalino-terreux, de préférence un sel du métal du silicate utilisé. Avantageusement, il s'agit de sulfate de sodium lorsque le silicate est le silicate de sodium et que l'agent acidifiant est l'acide sulfurique.

Lorsque l'électrolyte est un sel de métal alcalin, sa concentration est avantageusement comprise entre 0,05 et 0,7 mol/L dans le pied de cuve, notamment lorsqu'il s'agit de sulfate de sodium. Quand un sel de métal alcalino-terreux est utilisé à titre d'électrolyte, sa concentration dans le pied de cuve est de préférence comprise entre 0,001 et 0,01 mol/L.

Les étapes (A) à (C) précitées sont avantageusement mises en oeuvre à une température de 60 à 95° C, typiquement entre 80 et 95° C, par exemple à une température de l'ordre de 90 à 95° C.

La silice utile selon l'invention est de préférence une silice de précipitation obtenue par un séchage, de préférence par un séchage par atomisation, d'une dispersion aqueuse de silice issue d'un procédé comprenant les étapes (A) à (C) précitées, de préférence une dispersion aqueuse de silice présentant un taux de matière sèche d'au moins 18%, en particulier d'au moins 20%, et typiquement d'au moins 25%. Alternativement, il peut s'agir d'une silice préparée selon un autre procédé, mais présentant les mêmes caractéristiques ; en tout état de cause, il s'agit généralement d'une silice de précipitation.

Les inventeurs ont maintenant mis en évidence que l'incorporation d'une silice du type précité dans un matériau polymère thermoplastique, conduit à une amélioration notable de la résistance au choc du matériau, et ce sans avoir à modifier la surface de la silice, par exemple par des acides gras. Les inventeurs ont notamment observé ce phénomène pour des matériaux à base de polyoléfines telles que le polypropylène.

Ces résultats sont tout à fait surprenants, dans la mesure où il est généralement connu que l'incorporation d'une charge minérale dans un matériau polymère tend à diminuer la résistance au choc, lorsque la charge n'est pas traitée en surface par un agent organique de type acide gras, en particulier lorsque ce polymère est une polyoléfine du type polypropylène. Un tel effet est en général attribué à la formation de défauts dans le matériau, dus notamment à la création d'interfaces organiques/inorganiques. Or, il s'avère maintenant que, contre toute attente, les silices mises en évidence par les inventeurs conduisent, au contraire, à une amélioration de la résistance au choc lorsqu'elles sont utilisées à titre de charges minérales dans un matériau polymère thermoplastique.

De plus, les travaux des inventeurs ont également permis de mettre en évidence que, conjointement à l'accroissement de la résistance au choc, l'incorporation des silices précitées dans un matériau polymère thermoplastique conduit, dans la plupart des cas, à une amélioration inattendue des caractéristiques d'allongement en traction du matériau. En particulier, l'utilisation des silices du type précité à titre de charge minérale dans un matériau polymère thermoplastique induit le plus souvent une augmentation de l'allongement à la rupture en traction du matériau, telle que mesurée selon la norme ISO 527, ce qui peut se révéler avantageux notamment lorsque le matériau est destiné à être soumis à de fortes flexions, par exemple lorsqu'il est utilisé dans des pièces injectées de formes complexes, ou bien lorsqu'il est destiné à assurer un rôle de charnière entre deux pièces.

En outre, il s'avère que l'incorporation des silices précitées dans un matériau polymère thermoplastique ne s'accompagne pas d'un effondrement de la rigidité du matériau. Dans de nombreux cas, on observe même une augmentation de la rigidité du matériau, ce qui se traduit par une augmentation du module de flexion du matériau (tel que mesuré selon la norme ISO 178). En d'autres termes, les silices utilisées permettent alors d'augmenter à la fois la résistance au choc et la rigidité. La possibilité d'une telle amélioration conjointe de ces deux caractéristiques par la mise en oeuvre d'une unique charge dans un polymère, notamment de type polyoléfine, est tout à fait surprenante. En effet, le plus souvent, lorsqu'on introduit une charge minérale de type silice dans un matériau polymère, on observe en général une amélioration sélective soit de la résistance au choc, soit de la rigidité du matériau, et l'amélioration de l'une de ces propriétés se fait en général au détriment de l'autre, ce qui oblige le plus souvent à utiliser un mélange de charges de nature différentes lorsqu'on souhaite obtenir une augmentation conjointe des deux propriétés.

Notamment pour obtenir les effets précités de façon particulièrement prononcés, il se révèle le plus souvent avantageux que la silice utilisée selon l'invention soit une silice susceptible d'être obtenue (et de préférence obtenue) par un séchage, de préférence par atomisation, d'une dispersion aqueuse de silice issue d'un procédé de précipitation de silice par réaction d'un silicate et d'un agent acidifiant, où le procédé de précipitation comprend les étapes suivantes :
(A) former un pied de cuve contenant, en milieu aqueux :
   - une partie seulement de la quantité totale du silicate engagé dans la réaction ; et
   - un électrolyte, de préférence du type précité;
(B) ajouter une première partie d'agent acidifiant au pied de cuve de l'étape (A), jusqu'à l'obtention d'une valeur de pH compris entre 7 et 8,5, de préférence entre 7,5 et 8,5 ;
(C) ajouter au milieu réactionnel obtenu à l'issu de l'étape (B) la seconde partie du silicate, en introduisant conjointement une autre partie de l'agent acidifiant, en maintenant le pH du milieu sensiblement constant au cours de cette addition conjointe, de préférence autour d'une valeur comprise entre 7 et 8,5, avantageusement entre 7,5 et 8,5, par exemple en maintenant le pH à une valeur sensiblement égale à la valeur de pH atteinte dans l'étape (B).

Quel que soit le mode de mise en oeuvre des étapes (A), (B) et (C), une silice utile selon l'invention est avantageusement obtenue en filtrant la suspension, par exemple sur filtre presse (où on peut avantageusement laver le gâteau de filtration par exemple par de l'eau, notamment pour éliminer l'excès de réactifs), puis en délitant mécaniquement le gâteau de filtration obtenu (qui est généralement visqueux et non pompable), avantageusement en y ajoutant un agent de délitage chimique tel que de l'aluminate de sodium, et en séchant par atomisation le gâteau délité obtenu, par exemple à l'aide d'un atomiseur à buse, à pression liquide ou à deux fluides.

Selon un mode de réalisation intéressant, la silice utilisée selon l'invention est une silice sous la forme de billes sensiblement sphériques, qui est susceptible d'être obtenue (et de préférence est obtenue) par un séchage par atomisation d'une dispersion aqueuse de silice, où ladite dispersion aqueuse de silice :
- est issue d'un procédé de précipitation de silice par réaction d'un silicate et d'un agent acidifiant, comprenant les étapes successives (A) à (C) telles que définies précédemment, par exemple dans les conditions préférentielles ci-dessus,
- a un taux de matière sèche d'au moins 18% en masse, par exemple d'au moins 20% en masse, et plus particulièrement d'au moins 25% en masse; et
- a un pH d'au moins 4, de préférence d'au moins 4,5, par exemple compris entre 5 et 7.

Dans ce cadre, la silice utilisée peut par exemple être une silice du type de celle décrite dans la demande EP 396 450.

Selon un mode de réalisation particulièrement intéressant, la silice utilisée est susceptible d'être obtenue (et de préférence est obtenue) en mettant en oeuvre les étapes suivantes :
(A) former un pied de cuve contenant, en milieu aqueux:
   - un silicate, de préférence du silicate de sodium ; et
   - un électrolyte, de préférence du sulfate de sodium;
(B) ajouter un agent acidifiant, de préférence de l'acide sulfurique, au pied de cuve de l'étape (A), jusqu'à l'obtention d'une valeur de pH compris entre 7,5 et 8,5, par exemple entre 7,8 et 8,2, typiquement une valeur de l'ordre de 8 ;
(C) ajouter un silicate au milieu réactionnel obtenu à l'issu de l'étape (B), de préférence du silicate de sodium, en introduisant conjointement un agent acidifiant, de préférence de l'acide sulfurique, en maintenant le pH du milieu sensiblement constant au cours de cette addition conjointe, dans la gamme de pH comprise entre 7,5 et 8,5, par exemple entre 7,8 et 8,2, et typiquement à une valeur de 8 +/- 0,1 ;
(D) ajouter un agent acidifiant, de préférence de l'acide sulfurique, au milieu réactionnel obtenu à l'issu de l'étape (C), jusqu'à l'obtention d'une valeur de pH compris entre 4 et 7, typiquement entre 4,5 et 6 ;
(E) filtrer la dispersion obtenue à l'issue de l'étape (D), puis déliter mécaniquement le gâteau de filtration obtenu, de préférence en présence d'aluminate de sodium à titre d'agent de délitage ; et
(F) sécher par atomisation le gâteau délité obtenu à l'issue de l'étape (E).

Quel que soit son mode de préparation exact, une silice utilisée selon l'invention a une surface spécifique BET inférieure ou égale à 130 m²/g. Au sens de la présente description, on entend par "surface spécifique BET" la surface spécifique de la silice telle que déterminée selon la méthode de BRUNAUER - EMMET - TELLER décrite dans The journal of the American Chemical Society, volume 60, page 309, février 1938, et correspondant à la norme internationale ISO 5794/1 (annexe D).

La surface spécifique BET d'une silice utilisée selon l'invention reste de préférence inférieure ou égale à 100m²/g, par exemple inférieure ou égale à 90m²/g, par exemple inférieure ou égale à 80m²/g, ce qui permet d'obtenir une amélioration de la résistance au choc particulièrement prononcée.

D'autre part, il est souvent indiqué que cette surface spécifique soit au moins égale à 20 m²/g , avantageusement au moins égale à 40m²/g, et plus avantageusement encore au moins égale à 60m²/g. En effet, de telles surfaces spécifiques permettent notamment d'obtenir des résultats intéressants en termes d'amélioration de la rigidité.

Ainsi, la surface spécifique BET d'une silice selon l'invention peut avantageusement être comprise entre 20 et 100 m²/g, plus préférentiellement entre 40 et 90 m²/g, cette surface spécifique BET étant typiquement de l'ordre de 60 à 80 m²/g.

Par ailleurs, la silice utilisée selon l'invention a en général une surface spécifique CTAB inférieure ou égale à 130 m²/g, typiquement comprise entre 20 et 100 m²/g, par exemple entre 40 et 90 m²/g, notamment entre 50 et 80 m²/g. La "surface spécifique CTAB" à laquelle il est fait référence ici désigne la surface externe déterminée selon la norme NF T 45007 (novembre 1987) (5.12).

Les silices utiles selon l'invention ont le plus souvent un volume poreux total d'au moins 1,6 cm³/g, ce volume poreux étant en général d'au moins 1,8 cm³/g. Au sens de la présente description, on entend par "volume poreux total" le volume de pores déterminé par porosité au mercure, reflétant essentiellement la porosité de pores de diamètre compris entre 0,001 et 10 microns, les diamètres de pores étant calculés par la relation de WASHBURN avec un angle de contact thêta de 130°, et une tension superficielle gamma de 484 Dynes/cm.

D'autre part, les silices utiles selon l'invention ont de préférence une densité de remplissage à l'état tassé (DRT) qui est supérieure ou égale à 0,1, de préférence supérieure ou égale à 0,15 et plus préférentiellement supérieure ou égale à 0,2, par exemple supérieure ou égale à 0,25, cette DRT pouvant dans certains cas être supérieure ou égale à 0,32. La DRT désigne ici la densité telle que mesurée selon la norme NFT 30-042.

Par ailleurs, une silice utile selon l'invention a avantageusement une prise d'huile DOP d'au plus 270 ml/100 grammes, cette prise d'huile étant de préférence inférieure ou égale à 260 ml/100 grammes, et typiquement inférieure ou égale à 250 ml/100 g. La prise d'huile DOP à laquelle il est fait référence dans la présente description est déterminée selon la norme NF T 30-022 (mars 1953) en mettant en oeuvre le dioctylphtalate.

Le pH d'une silice utile selon l'invention est quant à lui avantageusement de l'ordre de 6 à 8, typiquement entre 6,5 et 7,5, par exemple entre 6,8 et 7,2. Ce pH est celui mesuré selon la norme ISO 787/9 (pH d'une suspension de la silice testée à 5 % dans l'eau).

Le taux d'humidité d'une silice employée à titre de charge selon l'invention est par ailleurs avantageusement inférieur ou égal à 10%, et plus préférentiellement inférieur à 9%. Typiquement, ce taux d'humidité est de l'ordre de 6 à 8%.

Comme souligné plus haut dans la présente description, les silices de l'invention se révèlent particulièrement adaptées à titre de charge minérales pour améliorer la résistance au choc de matériau polymères thermoplastiques de type polyoléfines, et ce sans diminuer leur rigidité, voire en améliorant cette rigidité dans certains cas, et en améliorant le plus souvent, dans le même temps, les caractéristiques d'allongement en traction du matériau.

Au sens de la présente description, on entend par "matériau polymère thermoplastique" un matériau comprenant à titre de constituant majoritaire un polymère thermoplastique ou un mélange de polymères thermoplastiques de type polyoléfines, et se comportant globalement comme un polymère thermoplastique. Ainsi, un matériau polymère thermoplastique au sens de la présente description comprend généralement au moins 50% en masse d'un polymère thermoplastique ou d'un mélange de polymères thermoplastiques, le plus souvent au moins 75% en masse, par exemple au moins 80% en masse, et typiquement d'au moins 90%, voire au moins 95% en masse. Outre ce ou ces polymère(s) thermoplastique(s) et la silice utilisée à titre de charge, le matériau polymère thermoplastique peut comprendre d'autres ingrédients tels que des additifs permettant la conservation ou la bonne mise en oeuvre du polymère, ou bien des additifs permettant d'améliorer encore les propriétés de résistance au choc du matériau (charges polymères ou charges minérales traitées en surface par des acides gras, par exemple). La silice de l'invention peut également être utilisée en combinaison avec d'autres charges minérales, telles que du talc, de la wollastonite, du kaolin, du mica, du carbonate de calcium, des fibres de verres, et/ou silicates. La présence de ces agents additionnels peut toutefois permettre d'améliorer encore la résistance au choc, et/ou d'améliorer d'autres caractéristiques du matériau. En particulier, la mise en oeuvre de la silice de l'invention conjointement à d'autres charges minérales s'avère souvent avantageuse pour améliorer la résistance à la rayure du matériau.

Néanmoins, la présence de tels composants additionnels n'est aucunement requise pour obtenir l'effet d'amélioration de la résistance au choc selon l'invention. Selon un mode particulier de réalisation, la silice de l'invention est utilisée à titre d'unique charge minérale dans le matériau polymère.

Par ailleurs, il est à souligner que la silice utilisée selon l'invention ne nécessite pas un traitement de surface par des molécules organiques telles que des acides gras pour assurer l'effet d'amélioration de la résistance au choc de l'invention. Néanmoins, selon un mode de réalisation envisageable, le matériau polymère peut comprendre un additif choisi parmi les silanes, les acides gras, les acides phosphoniques, les titanates, les cires de polypropylène, les cires de polyéthylène et/ou les polypropylènes greffés anhydride maléique, ce qui permet notamment d'assurer une meilleure compatibilité entre la silice (et les éventuelles autres charges minérale présentes) et les polymères thermoplastiques.

Selon l'invention les silices de l'invention sont utilisées pour améliorer la résistance au choc de matériau polymère thermoplastique à base d'une ou plusieurs polyoléfines, et en particulier les matériaux polymères qui comprennent :
- une homopolyoléfine choisie parmi un polyéthylène, un polypropylène, un polybutylène, ou un poly(méthylpentène) ;
- une polyoléfine copolymère, à base d'au moins deux types d'unités choisies parmi les unités éthylène, propylène, butylène et méthylpentène ; ou
- un mélange de deux ou plus desdites homopolyoléfines et/ou desdites polyoléfines copolymères.

Les silices de l'invention sont par exemple bien adaptées à titre de charge dans des matériaux thermoplastique à base de polypropylène, de polyéthylène ou à base de mélanges de ces polymères ou de leur copolymères. Selon un mode de réalisation particulièrement intéressant, le matériau polymère thermoplastique où est incorporée la charge de silice selon l'invention est un matériau à base de polypropylène ou d'un copolymère de propylène et d'éthylène.

Quelle que soit la nature du matériau thermoplastique, la silice utilisée à titre de charge selon l'invention est généralement en une teneur comprise entre 0,5% et 10 % en masse, par exemple entre 1 et 7%, et typiquement entre 2 et 6%, par rapport à la masse totale du matériau polymère thermoplastique incluant la silice.

L'incorporation de la silice dans le matériau peut se faire selon tout moyen connu en soi pour l'incorporation de charges minérales dans une matrice polymère thermoplastique. En règle générale, cette incorporation est effectuée en mélangeant sous contrainte la silice et le ou les polymères du matériau au-delà de leur température de transition vitreuse, éventuellement en présence d'additifs, par exemple des stabilisants thermiques du type de l'IRGANOX^{®}B225 commercialisé par la société Ciba. Il convient en général de réaliser un mélange sous contrainte dans des conditions suffisantes pour obtenir une bonne incorporation de la silice. Un tel mélange peut par exemple être effectué en utilisant des dispositifs de types mélangeurs internes ou extrudeuse.

Selon un aspect particulier, l'invention a pour objet les matériaux polymères thermoplastiques comprenant une silice selon l'invention, selon la revendication 13 à titre de charge minérale améliorant la résistance au choc.

Ces matériaux sont en particulier adaptés pour la fabrication de couches de revêtement, pièces mécaniques, et de pièces pour l'automobile.

De façon plus spécifique, l'invention a également pour objet les matériaux polymères thermoplastiques de ce type qui comprennent une ou plusieurs polyoléfines selon la revendication 13 à titre de constituant majoritaire (à savoir constituant plus de 50% en masse, en général au moins 75% en masse, par exemple au moins 90%, voire 95% en masse du matériau), et plus spécifiquement des matériaux de ce type comprenant du polypropylène à titre de constituant majoritaire. Dans ces matériaux, l'introduction de la silice de l'invention à titre de charge minérale conduit le plus souvent à l'obtention de matériaux polymères présentant des propriétés optiques similaires au matériau non chargé, contrairement à ce qui est observé avec la plupart des charges minérales qui conduisent à une modification de la teinte du matériau, de sa transparence ou de ses propriétés de diffusion de la lumière. La conservation de propriétés optiques du matériau de départ est souvent telle que l'introduction de la silice dans le matériau ne conduit pas à une modification de l'aspect du matériau visuellement. La modification des propriétés du matériau peut par ailleurs être chiffrée de façon plus précise, par exemple par spectro-colorimétrie, d'où il ressort le plus souvent que l'introduction d'une silice selon l'invention dans un matériau polymère à base d'une polyoléfine telle que le polyéthylène conduit tout au plus à des modifications très faibles des propriétés de transparence, de transmission de la lumière et de coloration du matériau.

Ces propriétés permettent notamment d'obtenir des matériaux polyoléfiniques thermoplastiques résistant au choc et présentant de bonnes propriétés de transparence, qui constituent un aspect particulier de l'invention.

### EXEMPLE 1

### Préparation d'une silice de précipitation utile selon l'invention (silice S)

### 1.1. Préparation d'une dispersion de silice de précipitation à partir de silicate de sodium et d'un agent acidifiant (acide sulfurique)

Le silicate utilisé dans cet exemple est un silicate de sodium ayant un rapport pondéral SiO₂/Na₂O égal à 3,42, et mis en oeuvre sous la forme d'une solution aqueuse (S_{silicate}), ayant une densité de 1,230 à 20 °C.

L'agent acidifiant mis en oeuvre est une solution aqueuse (S_{acide}) d'acide sulfurique, qui a une densité à 20 °C égale à 1,050.

La réaction de précipitation de silice à partir de ces deux solutions a été réalisée en une durée totale de 75 minutes, dans les conditions suivantes :

### 1.1.1. Formation d'un pied de cuve comprenant une partie du silicate et un électrolyte (Na₂SO₄)

Dans un réacteur en acier inoxydable muni d'un système d'agitation par hélice et de moyens de chauffage, on a introduit, sous agitation:
- 636 litres d'eau industrielle,
- 13,2 kg de Na₂SO₄,
- 330 litres de la solution de silicate de sodium (S_{slicate})

La concentration en SiO₂ dans le pied de cuve ainsi formé est de 80 g/L.

### 1.1.2. Addition d'une première partie de l'agent acidifiant

Le pied de cuve précédemment préparé a été porté à une température de 95°C, en maintenant le mélange sous agitation.

Une fois cette température atteinte, on a introduit dans le milieu 416 litres de la solution d'acide sulfurique (S_{acide}), ce par quoi on a obtenu dans le milieu réactionnel une valeur de pH égale à 8 (mesurée à 95°C).

### 1.1.3. Addition conjointe de la seconde partie du silicate et d'une autre partie de l'agent acidifiant

Une fois atteinte la valeur de pH de 8 précitée, on a introduit dans le milieu, de façon simultanée :
- 82 litres de solution de la solution de silicate de sodium (S_{silicate}) ; et
- 125 litres de la solution d'acide sulfurique (S_{acide}).

Cette introduction conjointe du silicate et de l'agent acidifiant a été réalisée en maintenant le milieu sous agitation et en contrôlant les débits des solutions introduites, de façon à maintenir le pH du milieu égal à 8 +/- 0,1 pendant toute la période de l'introduction simultanée. Plus précisément, l'addition conjointe a été effectuée en introduisant la solution (S_{silicate}) avec un débit constant et en adaptant le débit d'introduction de l'acide sulfurique en fonction du pH mesuré.

### 1.1.4. Addition d'une dernière partie d'agent acidifiant

Une fois terminée l'addition conjointe du silicate et de l'agent acidifiant, on à continué à introduire de l'agent acidifiant dans le milieu, à raison de 50 litres de solution (S_{acide}) introduite à un débit de 500 L/h (pendant 6 minutes), sous agitation.

Cette dernière introduction d'agent acidifiant amène le pH du milieu à une valeur de 5,2.

Le milieu réactionnel obtenu se présente alors sous la forme d'une bouillie réactionnelle qu'on a maintenu sous agitation pendant 5 minutes.

A l'issue de ces différentes étapes, on a obtenu une bouillie silice précipitée qui a été filtrée et lavée par de l'eau sur un filtre presse, de telle sorte que l'on récupère finalement un gâteau de filtration dont la perte au feu est de 79%.

Le gâteau de silice obtenu a été fluidifié au moyen d'une action mécanique et chimique, à savoir en le soumettant à une agitation mécanique et en ajoutant au gâteau de l'aluminate de sodium.

A l'issue de cette opération de délitage, on a obtenu une dispersion de silice D (gâteau délité de faible viscosité, pompable), de pH égal à 6,4.

### 1.2. Séchage par atomisation de la dispersion de silice D

La dispersion obtenue à l'issue du délitage précédent a été séchée par atomisation, au moyen d'un atomiseur à buses.

On a ainsi obtenu une silice S qui présente les caractéristiques suivantes :

| | |
|---|---|
| surface spécifique BET: | 73m²/g |
| surface spécifique CTAB : | 70m²/g |
| prise d'huile DOP: | 247 ml/100 g |
| DRT : | 0,29 |
| pH: | 6,9 |
| humidité (2h à 105 °C): | 7% |

### EXEMPLE 2

### Utilisation de la silice S pour améliorer la résistance au choc d'un matériau thermoplastique à base de polypropylène (incorporation de la silice dans le matériau au moyen d'un mélangeur interne)

La silice S de l'exemple 1 a été utilisée à titre de charge minérale pour l'amélioration de la résistance au choc d'un matériau polymère ayant la Formulation (1) suivante (les pourcentages indiqués sont des pourcentages en masse par rapport à la masse totale de la formulation) :
- polypropylène : 96,8%
- stabilisant thermique : 0,2%
- silice S : 3%

Le polypropylène utilisé dans cet exemple est le polypropylène commercialisé sous le nom de PPH 4060 par la société Atofina (polypropylène homopolymère ayant un indice de fluidité à chaud (230°C sous 2,16 kg) de 3g/10min).

Le stabilisant thermique est quant à lui l'IRGANOX^{®}B225 commercialisé par la société Ciba (mélange d'antioxydants à base de composés phénoliques).

Le matériau polymère incorporant la silice a été préparé en introduisant 35 g de polypropylène, 0,07 g de stabilisant thermique et 1,1 g de silice S dans un mélangeur interne Brabenber initialement porté à un température de 150°C, avec un taux de remplissage de 0,7, où la cuve du mélangeur interne est munie de deux rotors de type W50 pour thermoplastique, tournant à une vitesse de 125 tours par minute.

On a effectué un mélange des constituants introduits dans ces conditions pendant 5 minutes, la température s'élevant au cours du mélange compte tenu du cisaillement interne, conduisant à une température finale de l'ordre de 180°C.

Une partie de la formulation ainsi obtenue a été moulée par pressage dans un moule parallélépipédique de dimensions 100 mm x 100 mm x 10 mm, entre deux plateaux de compression chauffés à 200°C, sous une pression de 200 bars (2.10-³ Pa) pendant 2 minutes. Le moule a ensuite été refroidi entre les deux plateaux portés à 18°C sous une pression de 200 bars, pendant 4 minutes.

Dans la plaque de polymère obtenue à l'issue de ce moulage, on a découpé deux éprouvettes parallélépipédiques de dimensions 80 mm x 4 mm x 10 mm.

Sur la première éprouvette, on a mesuré l'énergie de rupture selon de test de résistance au choc Charpy à 23°C sur éprouvette entaillée, dans les conditions de la norme ISO 179 à 23°C.

Sur la seconde éprouvette, on a mesuré le module de flexion dans les conditions de la norme ISO 178 à 23° C.

A titre de comparaison, les mêmes tests ont été réalisés sur des éprouvettes préparées dans les mêmes conditions, mais à partir d'une formulation témoin (T1) sans silice.

Les résultats obtenus sont reportés dans le Tableau I ci-dessous, d'où il ressort que la présence de silice à titre de charge minérale dans la formulation accroît à la fois la résistance au choc (augmentation de l'énergie de rupture) et la rigidité (augmentation du module de flexion).

**Tableau 1**

| | **Formulation (1)** | **Témoin (T1)** |
|---|---|---|
| polypropylène (PPH 4060) | 96,8% | 99,8% |
| stabilisant thermique (IRGANOX^{®}B225) | 0,2% | 0,2% |
| silice S de l'exemple 1 | 3% | - |
| résistance au choc Charpy à 23°C (kJ/m²) | 6,3 | 5,1 |
| Module de flexion (GPa) | 1,39 | 1,30 |

### EXEMPLE 3

### Utilisation de la silice S pour améliorer la résistance au choc d'un matériau thermoplastique à base de polypropylène (incorporation de la silice dans le matériau au moyen d'une extrudeuse)

La silice S de l'exemple 1 a été utilisée à titre de charge minérale pour l'amélioration de la résistance au choc d'un matériau polymère ayant globalement la même formulation que celle de l'exemple 2, mais différant par le mode d'incorporation de la silice.

Plus précisément, dans cet exemple, le matériau polymère a la Formulation (2) suivante:
- polypropylène PPH 4060: 96,8%
- stabilisant thermique IRGANOX^{®}B225: 0,2%
- silice S de l'exemple 1: 3%

L'incorporation de la silice dans le matériau a été effectuée en introduisant 2420 g de polypropylène, 5 g de stabilisant thermique et 75 g de silice S dans un mélangeur cube et en mélangeant pendant 10 minutes à 150°C, puis en introduisant le mélange dans une extrudeuse WERNER double vis ZSK30 (filière), avec un profil de température dans l'extrudeuse de 168°C/168°C/182°C/188°C/182°C, une vitesse de rotation des vis co-rotatives de 230 tours par minute, et un débit d'introduction des constituants à l'entrée ajusté pour obtenir un couple de 45% du couple maximal de l'extrudeuse.

Le jonc obtenu en sortie de filière a été refroidi puis débité en granulés, puis les granulés obtenus ont été introduits dans un moule d'injection ARBURG avec un profil de température de 180°C/180°C/180°C/180°C/40°C, et une pression d'injection fixé à 55% de la pression maximale de la machine, de façon à former une plaque polymère dans laquelle on a découpé deux éprouvettes parallélépipédiques de dimensions 80 mm x 4 mm x 10 mm, qui ont été utilisées comme dans l'exemple précédent :
- sur la première éprouvette, on a mesuré l'énergie de rupture selon de test de résistance au choc Charpy à 23°C sur éprouvette entaillée, dans les conditions de la norme ISO 179.
- sur une seconde éprouvette, on a mesuré le module de flexion dans les conditions de la norme ISO 178.

Par ailleurs, on a également découpé une éprouvette en haltère pour déterminer l'allongement à la rupture en traction selon la norme ISO 527.

A titre de comparaison, les mêmes tests ont été réalisés sur des éprouvettes préparées dans les mêmes conditions, mais à partir d'une formulation témoin (T2) sans silice.

Les résultats obtenus sont reportés dans le Tableau Il ci-après, qui fait apparaître que, là encore, l'incorporation de silice dans le matériau polymère induit à la fois une augmentation de la résistance au choc et de la rigidité, avec, en plus une augmentation de l'allongement à la rupture en traction.

**Tableau II**

| | **Formulation (2)** | **Témoin (T2)** |
|---|---|---|
| polypropylène (PPH 4060) | 96,8% | 99,8% |
| stabilisant thermique (IRGANOX^{®}B225) | 0,2% | 0,2% |
| silice S de l'exemple 1 | 3% | - |
| résistance au choc Charpy à 23°C (kJ/m²) | 3,9 | 3,3 |
| Module de flexion (GPa) | 1,48 | 1,36 |
| Allongement à la rupture en traction (%) | 2,1 | 0,7 |

Dans cet exemple, on a également comparé les propriétés optiques des deux matériaux à l'aide d'un spectro-colorimètre MINOLTA CM508. Les résultats obtenus sont reportés dans le Tableau comparatif IIA ci-dessous, d'où il ressort que les deux matériaux ont des qualités optiques similaires.

**Tableau IIA**

| **Propriétés optiques** | **L*** | **a*** | **b*** | **contraste** |
|---|---|---|---|---|
| **Formulation (2)** | 64 | -0,1 | 4,2 | 15 |
| **Témoin (T2)** | 68 | 0,7 | 8,6 | 28 |

| | | | | |
|---|---|---|---|---|
| L* : luminance sur fond noir a* : indice colorimétrique (axe rouge-vert) b*: indice colorimétrique (axe jaune-bleu) contraste : contraste fond noir/fond blanc ; reflète les propriétés de transmission de la lumière | | | | |

### EXEMPLE 4

### Utilisation de la silice S pour améliorer la résistance au choc d'un matériau thermoplastique à base d'un copolymère polyoléfinique (incorporation de la silice dans le matériau au moyen d'un mélangeur interne)

La silice S de l'exemple 1 a été utilisée à titre de charge minérale pour l'amélioration de la résistance au choc d'un matériau polymère ayant la formulation (3) suivante (les pourcentages indiqués sont des pourcentages en masse par rapport à la masse totale de la formulation) :
- copolymère polyoléfinique : 96,8%
- stabilisant thermique: 0,2%
- silice S : 3%

Le copolymère polyoléfinique utilisé dans cet exemple est un copolymère de propylène et d'éthylène hétérophasique commercialisé sous le nom de PPC 7712 par la société Atofina (copolymère ayant un indice de fluidité à chaud (230°C sous 2,16 kg) de 13g/10min).

Le stabilisant thermique est l'IRGANOX^{®}B225 des exemples 2 et 3.

Le matériau polymère incorporant la silice a été préparé en introduisant 35 g de polypropylène, 0,07 g de stabilisant thermique et 1,1 g de silice S dans un mélangeur interne Brabenber, dans les conditions de l'exemple 2, puis on a moulé par pressage la composition réalisée, et on a découpé deux éprouvettes parallélépipédiques de dimensions 80 mm x 4 mm x 10 mm de la m^me façon que dans l'exemple 2.

Sur la première éprouvette, on a mesuré l'énergie de rupture selon de test de résistance au choc Charpy à 23°C sur éprouvette entaillée, dans les conditions de la norme ISO 179. Sur la seconde éprouvette, on a mesuré le module de flexion dans les conditions de la norme ISO 178.

A titre de comparaison, les mêmes tests ont été réalisés sur des éprouvettes préparées dans les mêmes conditions, mais à partir d'une formulation témoin (T3) sans silice.

Les résultats, reportés dans le Tableau III ci-dessous, montrent que la présence de silice à titre de charge minérale dans la formulation accroît la résistance au choc, ainsi que la rigidité dans une moindre mesure.

**Tableau III**

| | **Formulation (3)** | **Témoin (T3)** |
|---|---|---|
| copolymère (PPC 7712) | 96,8% | 99,8% |
| stabilisant thermique (IRGANOX^{®}B225) | 0,2% | 0,2% |
| silice S de l'exemple 1 | 3% | - |
| résistance au choc Charpy à 23°C (kJ/m²) | 6,3 | 5,1 |
| Module de flexion (GPa) | 1,39 | 1,30 |

## Revendications

1. Utilisation d'une silice ayant une surface spécifique BET inférieure ou égale à 130 m²/g et susceptible d'être obtenue par un séchage d'une dispersion aqueuse de silice issue d'un procédé de précipitation de silice par réaction d'un silicate et d'un agent acidifiant, où le procédé de précipitation comprend les étapes suivantes :
(A) former un pied de cuve contenant, en milieu aqueux:
- au moins une partie de la quantité totale du silicate engagé dans la réaction de précipitation ; et
- un électrolyte;
(B) ajouter une première partie d'agent acidifiant au pied de cuve de l'étape (A), jusqu'à l'obtention d'une valeur de pH compris entre 7 et 8,5; et
(C) le cas échéant, ajouter au milieu réactionnel obtenu à l'issue de l'étape (B) la quantité restante de silicate, conjointement à une autre partie de l'agent acidifiant,
à titre de charge minérale dans un matériau polymère thermoplastique à base d'une ou plusieurs polyoléfines, pour augmenter la résistance au choc dudit matériau polymère.

2. Utilisation selon la revendication 1, où le matériau polymère thermoplastique comprend:
- une homopolyoléfine choisie parmi un polyéthylène, un polypropylène, un polybutylène, ou un poly(méthylpentène) ;
- une polyoléfine copolymère, à base d'au moins deux types d'unités choisies parmi les unités éthylène, propylène, butylène et méthylpentène ; ou
- un mélange de deux ou plus desdites homopolyoléfines et/ou desdites polyoléfines copolymères.

3. Utilisation selon la revendication 1 ou 2, où la silice utilisée est susceptible d'être obtenue par un séchage d'une dispersion aqueuse de silice issue d'un procédé de précipitation de silice par réaction d'un silicate et d'un agent acidifiant, où le procédé de précipitation comprend les étapes suivantes:
(A) former un pied de cuve contenant, en milieu aqueux :
- une partie seulement de la quantité totale du silicate engagé dans la réaction ; et
- un électrolyte ;
(B) ajouter une première partie d'agent acidifiant au pied de cuve de l'étape (A), jusqu'à l'obtention d'une valeur de pH compris entre 7 et 8,5 ;
(C) ajouter au milieu réactionnel obtenu à l'issu de l'étape (B) la seconde partie du silicate, en introduisant conjointement une autre partie de l'agent acidifiant, en maintenant le pH du milieu sensiblement constant au cours de cette addition conjointe.

4. Utilisation selon l'une des revendications 1 à 3, où la silice utilisée est une silice sous la forme de billes sensiblement sphériques, susceptible d'être obtenue par un séchage par atomisation d'une dispersion aqueuse de silice, où ladite dispersion aqueuse de silice :
- est issue d'un procédé de précipitation de silice par réaction d'un silicate et d'un agent acidifiant, comprenant les étapes successives (A) à (C) telles que définies dans la revendication 1 ou dans la revendication 2,
- a un taux de matière sèche d'au moins 18% en masse ;
- a un pH d'au moins 4.

5. Utilisation selon l'une des revendications précédentes, où la silice utilisée est susceptible d'être obtenue en mettant en oeuvre les étapes suivantes:
(A) former un pied de cuve contenant, en milieu aqueux :
- un silicate, de préférence du silicate de sodium : et
- un électrolyte ;
(B) ajouter un agent acidifiant au pied de cuve de l'étape (A), jusqu'à l'obtention d'une valeur de pH compris entre 7,5 et 8,5 ;
(C) ajouter un silicate au milieu réactionnel obtenu à l'issue de l'étape (B) en introduisant conjointement un agent acidifiant, et en maintenant le pH du milieu sensiblement constant au cours de cette addition conjointe dans la gamme de pH comprise entre 7,5 et 8,5 ;
(D) ajouter un agent acidifiant au milieu réactionnel obtenu à l'issue de l'étape (C), jusqu'à l'obtention d'une valeur de pH compris entre 4 et 7;
(E) filtrer la dispersion obtenue à l'issue de l'étape (D), puis déliter mécaniquement le gâteau de filtration obtenu, de préférence en présence d'aluminate de sodium à titre d'agent de délitage; et
(F) sécher par atomisation le gâteau délité obtenu à l'issue de l'étape (E)

6. Utilisation selon l'une des revendications précédentes, où la silice utilisée a une surface spécifique BET comprise entre 20 et 100 m²/g, et de préférence entre 40 et 90 m²/g.

7. Utilisation selon l'une des revendications précédentes, où la silice utilisée a un volume poreux total d'au moins 1,6 cm³/g.

8. Utilisation selon l'une des revendications précédentes, où la silice utilisée a une densité de remplissage à l'état tassé (DRT) supérieure ou égale à 0,1.

9. Utilisation selon l'une quelconque des revendications précédentes, où la silice utilisée a une prise d'huile DOP d'au plus 270 ml/100 grammes.

10. Utilisation selon l'une quelconque des revendications précédentes, où la silice est utilisée à titre d'unique charge minérale dans le matériau polymère thermoplastique.

11. Utilisation selon l'une des revendications précédentes, où le matériau polymère thermoplastique est à base de polypropylène ou d'un copolymère de propylène et d'éthylène.

12. Utilisation selon l'une des revendications précédentes, où la silice est introduite dans le matériau polymère thermoplastique en une teneur comprise entre 0,5% et 10 % en masse, par rapport à la masse totale du matériau polymère thermoplastique incluant la silice.

13. Matériau polymère thermoplastique comprenant :
- une homopolyoléfine choisie parmi un polyéthylène, un polypropylène, un polybutylène, ou un poly(méthylpentène) ;
- une polyoléfine copolymère, à base de deux types d'unités choisies parmi les unités éthylène, propylène, butylène et méthylpentène; ou
- un mélange de deux ou plus desdites homopolyoléfines et/ou desdites polyoléfines copolymères ;
et une silice telle que définie dans l'une des revendications 1 à 9 et ayant une surface spécifique BET comprise entre 20 et 100 m²/g, à titre de charge minérale améliorant la résistance au choc.

14. Matériau polymère thermoplastique selon la revendication 13, comprenant une ou plusieurs polyoléfines à titre de constituant majoritaire.

## Patentansprüche

1. Verwendung eines Siliziumoxids, das eine Flächenkennzahl BET von kleiner oder gleich 130 m²/g hat und das geeignet ist, um durch eine Trocknung einer wässrigen Siliziumoxid-Dispersion erlangt zu werden am Ende eines Prozesses der Abscheidung von Siliziumoxid durch Reaktion eines Silikats und eines säurebildenden Mittels, wobei der Prozess der Abscheidung die folgenden Schritte aufweist:
(A) Bilden eines Grundgemisches, welches aufweist in wässrigem Milieu:
- wenigstens einen Teil der Gesamtquantität des Silikats, das an der Abscheidungsreaktion beteiligt ist, und
- einen Elektrolyt,
(B) Hinzufügen eines ersten Teils säurebildenden Mittels zum Grundgemisch von Schritt (A) bis zum Erhalt eines pH-Werts, der zwischen 7 und 8,5 beträgt, und
(C) gegebenenfalls Hinzufügen der restlichen Quantität des Silikats zusammen mit einem anderen Teil des säurebildenden Mittels zum reaktiven Milieu, das am Ende von Schritt (B) erhalten wurde,
als mineralischer Füllstoff in einem thermoplastischen Polymermaterial aus einem oder mehreren Polyolefinen zum Erhöhen der Stoßfestigkeit des Polymermaterials.

2. Verwendung gemäß Anspruch 1, wobei das thermoplastische Polymermaterial aufweist:
- ein Homopolyolefin, welches ausgewählt ist aus einem Polyethylene, einem Polypropylene, einem Polybutylen oder einem Poly(methylpenten),
- ein Polyolefin-Copolymer aus wenigstens zwei Typeinheiten, die ausgewählt sind aus den Einheiten Ethylen, Propylen, Butylen und Methylpenten, oder
- eine Mischung von zwei oder mehr der besagten Homopolyolefine und/oder der besagten Polyolefin-Copolymere.

3. Verwendung gemäß Anspruch 1 oder 2, wobei das verwendete Siliziumoxid geeignet ist, um durch Trocknung einer wässrigen Siliziumoxid-Dispersion erhalten zu werden am Ende eines Prozesses der Abscheidung von Siliziumoxid durch Reaktion eines Silikats und eines säurebildenden Mittels, wobei der Prozess der Abscheidung die folgenden Schritte aufweist:
(A) Bilden eines Grundgemisches, welches aufweist in wässrigem Milieu:
- nur einen Teil von der Gesamtquantität des Silikats, das an der Reaktion beteiligt ist, und
- einen Elektrolyt,
(B) Hinzufügen eines ersten Teils des säurebildenden Mittels zu dem Grundgemisch aus Schritt (A) bis zum Erzielen eines pH-Wertes, der zwischen 7 und 8,5 beträgt,
(C) Hinzufügen des zweiten Teils des Silikats zu dem reaktiven Milieu, das am Ende von Schritt (B) erzielt wurde, unter gemeinsamem Einbringen eines anderen Teils des säurebildenden Mittels, unter im Wesentlichen Konstant-Aufrechterhalten des pH des Milieus im Laufe dieses gemeinsamen Hinzufügens.

4. Verwendung gemäß einem der Ansprüche 1 bis 3, wobei das verwendete Siliziumoxid ein Siliziumoxid der Form von im Wesentlichen kugelförmigen Teilchen ist, geeignet, um durch eine Trocknung durch Atomisierung einer wässrigen Siliziumoxid-Dispersion erlangt zu werden, wobei die wässrige Siliziumoxid-Dispersion:
- das Ergebnis eines Prozesses der Abscheidung des Siliziumoxids durch Reaktion eines Silikats und eines säurebildenden Mittels ist, aufweisend die sukzessiven Schritte (A) bis (C) wie in Anspruch 1 oder in Anspruch 2 definiert,
- einen Materialtrocknungsgrad von wenigstens 18 Masse-% hat,
- und einen pH von wenigstens 4 hat.

5. Verwendung gemäß einem der vorhergehenden Ansprüche, wobei das verwendete Siliziumoxid geeignet ist, um erhalten zu werden durch Ausführen der folgenden Schritte:
(A) Bilden eines Grundgemisches, welches aufweist in wässrigem Milieu:
- ein Silikat, bevorzugt Natriumsilikat, und
- einen Elektrolyt,
(B) Hinzufügen eines säurebildenden Mittels zum Grundgemisch aus Schritt (A) bis zum Erhalt eines pH-Werts, der zwischen 7,5 und 8,5 beträgt,
(C) Hinzufügen eines Silikats zum reaktiven Milieu, das am Ende von Schritt (B) erhalten wurde, unter gemeinsamem Einbringen eines säurebildenden Mittels und unter im Wesentlichen Konstant-Aufrechterhalten des pH im Laufe dieser gemeinsamen Hinzufügung im pH-Bereich, der zwischen 7,5 und 8,5 beträgt,
(D) Hinzufügen eines säurebildenden Mittels zu dem reaktiven Milieu, das am Ende von Schritt (C) erhalten wurde, bis zum Erhalt eines pH-Werts, der zwischen 4 und 7 beträgt,
(E) Filtern der Dispersion, die am Ende von Schritt (D) erhalten wurde, danach mechanisches Abscheiden des erhaltenen Filterkuchens, bevorzugt unter Anwesenheit von Natriumaluminat als Abscheidungsmittels, und
(F) Trocknen durch Atomisierung des abgeschiedenen Kuchens, der am Ende von Schritt (E) erhalten wurde.

6. Verwendung gemäß einem der vorhergehenden Ansprüche, wobei das verwendete Siliziumoxid eine Flächenkennzahl BET hat, die zwischen 20 und 100 m²/g beträgt, und bevorzugt zwischen 40 und 90 m²/g beträgt.

7. Verwendung gemäß einem der vorhergehenden Ansprüche, wobei das verwendete Siliziumoxid ein poröses Gesamtvolumen von wenigstens 1,6 cm³/g hat.

8. Verwendung gemäß einem der vorhergehenden Ansprüche, wobei das verwendete Siliziumoxid im Zusammendrückzustand eine Füllungsdichte (DRT) von größer oder gleich 0,1 hat.

9. Verwendung gemäß einem der vorhergehenden Ansprüche, wobei das verwendete Siliziumoxid eine Ölaufnahme DOP von höchstens 270 ml/100 Gramm hat.

10. Verwendung gemäß einem der vorhergehenden Ansprüche, wobei das Siliziumoxid als einziger mineralischer Füllstoff in dem thermoplastischen Material verwendet ist.

11. Verwendung gemäß einem der vorhergehenden Ansprüche, wobei das thermoplastische Material aus Polypropylen oder einem Copolymer aus Propylen und Ethylen ist.

12. Verwendung gemäß einem der vorhergehenden Ansprüche, wobei das Siliziumoxid in das thermoplastische Polymermaterial eingebracht ist mit einem Gehalt, der zwischen 0,5 Masse-% und 10 Masse-% beträgt bezüglich der Gesamtmasse des thermoplastischen Materials einschließlich des Siliziumoxids.

13. Thermoplastisches Polymermaterial, aufweisend:
- ein Homopolyolefin, das ausgewählt ist aus einem Polyethylen, einem Polypropylen, einem Polybutylen oder einem Poly(methylpenten),
- ein Polyolefin-Copolymer aus zwei Typeinheiten, die ausgewählt sind aus den Einheiten Ethylene, Propylen, Butylen und Methylpenten, oder
- ein Gemisch von zwei oder mehr der besagten Homopolyolefine und/oder der besagten Polyolefin-Copolymere,
und ein Siliziumoxid, das so wie in einem der Ansprüche 1 bis 9 definiert ist und das eine Flächenkennzahl BET hat, die zwischen 20 und 100 m²/g beträgt, als die Stoßfestigkeit verbessernder, mineralischer Füllstoff.

14. Thermoplastisches Polymermaterial gemäß Anspruch 13, aufweisend ein oder mehrere Polyolefine als Hauptbestandteil.

## Claims

1. Use of a silica having a BET specific surface area less than or equal to 130 m²/g and obtainable by drying an aqueous dispersion of silica produced by a silica precipitation process by reacting a silicate and an acidifying agent, wherein the precipitation process comprises the following steps:
(A) forming a starter containing, in aqueous medium:
- at least part of the total quantity of the silicate employed in the precipitation reaction; and
- an electrolyte;
(B) adding a first part of acidifying agent to the starter from step (A) until a pH value of between 7 and 8.5 is obtained; and
(C) if necessary, adding to the reaction medium obtained at the end of step (B) the remaining quantity of silicate jointly with another part of the acidifying agent,
as mineral filler in a thermoplastic polymeric material based on one or more polyolefins, to increase the impact resistance of the said polymeric material.

2. Use according to claim 1, wherein the thermoplastic polymeric material comprises:
- a homopolyolefin selected from a polyethylene, a polypropylene, a polybutylene or a poly(methylpentene);
- a copolymeric polyolefin based on at least two types of units selected from the units ethylene, propylene, butylene and methylpentene; or
- a mixture of two of more of the said homopolyolefins and/or the said copolymeric polyolefins.

3. Use according to claim 1 or 2, wherein the silica used is obtainable by drying an aqueous dispersion of silica produced by a silica precipitation process by reacting a silicate and an acidifying agent, wherein the precipitation process comprises the following steps:
(A) forming a starter containing, in aqueous medium:
- only part of the total quantity of the silicate employed in the reaction; and
- an electrolyte;
(B) adding a first part of acidifying agent to the starter of step (A) until a pH value of between 7 and 8.5 is obtained;
(C) adding to the reaction medium obtained at the end of step (B) the second part of the silicate, while jointly introducing another part of the acidifying agent, while maintaining the pH of the medium substantially constant during this joint addition.

4. Use according to one of claims 1 to 3, wherein the silica used is a silica in the form of substantially spherical beads, obtainable by spray-drying an aqueous dispersion of silica, wherein the said aqueous silica dispersion:
- is produced by a silica precipitation process by reacting a silicate and an acidifying agent, comprising the successive steps (A) to (C) as defined in claim 1 or in claim 2;
- has a dry matter content of at least 18% by weight;
- has a pH of at least 4.

5. Use according to one of the preceding claims, wherein the silica used is obtainable by implementing the following steps:
(A) forming a starter containing, in aqueous medium:
- a silicate, preferably sodium silicate; and
- an electrolyte;
(B) adding an acidifying agent to the starter of step (A) until a pH value of between 7.5 and 8.5 is obtained;
(C) adding a silicate to the reaction medium obtained at the end of step (B) while jointly introducing an acidifying agent and while maintaining the pH of the medium substantially constant during this joint addition in the pH range of between 7.5 and 8.5;
(D) adding an acidifying agent to the reaction medium obtained at the end of step (C) until a pH value of between 4 and 7 is obtained;
(E) filtering the dispersion obtained at the end of step (D), then mechanically disintegrating the filter cake obtained, preferably in the presence of sodium aluminate as the disintegrating agent; and
(F) spray-drying the disintegrated cake obtained at the end of step (E).

6. Use according to one of the preceding claims, wherein the silica used has a BET specific surface area of between 20 and 100 m²/g and preferably between 40 and 90 m²/g.

7. Use according to one of the preceding claims, wherein the silica used has a total pore volume of at least 1.6 cm³/g.

8. Use according to one of the preceding claims, wherein the silica used has a tamped filling density (TFD) greater than or equal to 0.1

9. Use according to one of the preceding claims, wherein the silica used has an oil absorption DOP of at most 270 ml/100 grams.

10. Use according to one of the preceding claims, wherein the silica is used as the sole mineral filler in the thermoplastic polymeric material.

11. Use according to one of the preceding claims, wherein the thermoplastic polymeric material is based on polypropylene or a copolymer of propylene and ethylene.

12. Use according to one of the preceding claims, wherein the silica is introduced into the thermoplastic polymeric material at a content of between 0.5 % and 10% by weight in relation to the total weight of the thermoplastic polymeric material including the silica.

13. Thermoplastic polymeric material comprising:
- a homopolyolefin selected from a polyethylene, a polypropylene, a polybutylene or a poly(methylpentene);
- a copolymeric polyolefin based on two types of units selected from the units ethylene, propylene, butylene and methylpentene; or
- a mixture of two or more of the said homopolyefins and/or the said copolymeric polyolefins;
and a silica as defined in one of claims 1 to 9 and having a BET specific surface area of between 20 and 100 m²/g as the mineral filler improving the impact resistance.

14. Thermoplastic polymeric material according to claim 13, comprising one or more polyolefins as the majority constituent.
